# EUROPÄISCHE PATENTSCHRIFT

(11) **EP 1 186 557 B1**
(45) Veröffentlichungstag und Bekanntmachung des Hinweises auf die Patenterteilung: **09.06.2004**
(21) Anmeldenummer: 01121097.8
(22) Anmeldetag: 03.09.2001
(51) Int. Cl.: B23Q 11/00, B23Q 11/10

(54) **Sammelbehälter mit Transportschnecke**
Container with a screw conveyor
Conteneur avec un transporteur à vis

(30) Priorität: 05.09.2000 DE 20015362 U
(43) Veröffentlichungstag der Anmeldung: 13.03.2002
(73) Patentinhaber: ARP GmbH & Co. KG, 72275 Alpirsbach-Peterzell (DE)
(72) Erfinder: Riegert, Wolfgang, 72275 Alpirsbach (DE); Riegert, Klaus, 72275 Alpirsbach (DE)
(74) Vertreter: Klocke, Peter, Dipl.-Ing.

(56) Entgegenhaltungen:
- DE-C- 19 626 174

## Beschreibung

Die vorliegende Erfindung betrifft einen Sammelbehälter mit einer Transportpumpe zur Förderung von flüssigen Medien mit Produktionsrückständen, wie z. B. Späne, Kühl- und Schmiermittel gemäß dem Oberbegriff des Anspruchs 1.

Bearbeitungsrückstände wie sie z. B. in der spanenden Industrie anfallen, müssen zusammen mit dem dort verwendeten Kühl- oder Schmiermittel von der Maschine abtransportiert werden, um an einer anderen Stelle die Trennung der Späne von dem flüssigen Medium durchzuführen. Dazu wird das Gemisch durch Rohrleitungen gepumpt oder gesaugt. Hierzu ist es erforderlich, dass die zerkleinerten Späne zu der Ansaugöffnung der Pumpe gefördert werden. Dies erfolgt beispielsweise durch die Strömung des Mediums zu einer am tiefsten Punkt angeordneten Pumpe (beispielsweise gemäß der EP 0 518 095 A1), oder mittels eines sich drehenden Räumarmes, der die auf dem ebenen Behälterboden befindlichen Späne konzentriert und in den Bereich der Ansaugöffnung der Förderpumpe bringt (vgl. hierzu EP 0 750 966 A1 des Anmelders). Ein Problem stellt bei diesen Vorrichtungen die Fluidisierung der Späne dar, d.h. die optimale Einstellung des Späne/Flüssigkeitsverhältnisses in bezug zur Transportpumpe, um den kontinuierlichen Betrieb aufrecht zu erhalten. Durch den geringen Abstand zwischen Räumarm und Förderpumpe kann es bei einer Überladung (ungünstiges Späne/Flüssigkeitsverhältnis) schnell zu einer Verstopfung kommen. Es ist hier daher nur ein Verhältnis Späne/Flüssigkeit von 1 % möglich. Außerdem soll die Vorrichtung möglichst klein und kostengünstig herstellbar sein.

In der DE 196 26 174 C1 wird eine Fräsmaschine mit einer Abfülleinrichtung für Schlämme, Stäube und Späne beschrieben, wobei ein Werkstücktisch mit einem Abführkanal vorgesehen ist, an den eine Absaugeinrichtung zur Erzeugung eines Unterdrucks in dem Abführkanal angeschlossen ist. Der Abführkanal weist ein Gefälle bis zu einer Entnahmeöffnung auf, über die Flüssigkeiten, Schlämme, Späne und dergleichen entnehmbar sind. Oberhalb der Entnahmeöffnung ist eine Absaugöffnung vorgesehen über die eine Absaugeinrichtung an dem jeweiligen Abführkanal angeschlossen ist und dazu dient, Stäube und trockene Späne, die im Bereich des Werkstücktisches anfallen, abzusaugen. In einer Ausbildung ist zusätzlich am Grund des Abführkanals eine Förderschnecke vorgesehen, die die Schlämme und auf den Grund des Abführkanals abgesunkene Stäube und Späne auch bei geringem Kühlmittetzufluss zuverlässig zu der Entnahmeöffnung transportiert. Eine Transportpumpe oder dergleichen für einen möglichen Weitertransport der aus der Entnahmeöffnung austretenden Flüssigkeit mit den Schlämmen, Spänen und Stäuben ist nicht beschrieben.

Der vorliegende Erfindung liegt die Aufgabe zugrunde, eine weitere Möglichkeit vorzuschlagen, mit der das zu befördemde Material zu der Ansaugöffnung der Transportpumpe bei gleichzeitiger Dosierung des Späne/Flüssigkeitsverhältnisses und nach Möglichkeit höherer Förderleistung gebracht werden kann.

Diese Aufgabe wird erfindungsgemäß durch einen Sammelbehälter mit den Merkmalen des Anspruchs 1 gelöst. Weitere vorteilhafte Ausgestaltungen sind den Unteransprüchen zu entnehmen. Die Aufgabe wird außerdem durch die Verwendung gemäß Anspruch 8 gelöst.

Der erfindungsgemäß ausgestaltete Sammelbehälter weist eine in dem Behälter angeordnete Transportschnecke auf, die die Späne in der Flüssigkeit zu der Ansaugöffnung der Transportpumpe, die sich im Bereich des Bodenbehälterbodens, beispielsweise am unteren Ende einer Seiten- oder Stirnwand, befindet. Die Transportschnecke selbst kann entweder zu der Ansaugöffnung der Transportpumpe geneigt oder auch gerade in dem Sammelbehälter angeordnet sein. Das Ende der Transportschnecke sollte dabei möglichst nahe an der Ansaugöffnung der Transportpumpe enden, um einen möglichst vollständigen Austrag mittels der Transportpumpe aus dem Sammelbehälter zu gewährleisten. Andererseits muss auch verhindert werden, dass eine Verstopfung der Ansaugöffnung durch den Herantransport einer plötzlichen größeren Menge verhindert wird. Aus diesem Grunde darf das Ende der Transportschnecke wiederum nicht zu nahe an der Ansaugöffnung enden.

Hier hat sich gezeigt, dass ein Abstand von 10 bis 100 mm ausreichend ist. Überraschenderweise tritt auch bei größeren Mengen von Spänen direkt vor der Ansaugöffnung keine Verstopfung auf, da durch das Ende der Transportschnecke die Ansaugöffnung freigeräumt wird. Gegebenfalls kann hier noch eine zusätzliche schaufelartige kleine Platte and der Spitze der Förderschnecke angeordnet werden.

Um den kontrollierten Transport der Späne in der Flüssigkeit zu der Ansaugöffnung zu gewährleisten, ist die Transportschnecke im Bereich der tiefsten Stelle einer in dem Sammelbehälter befindlichen im wesentlichen V-förmigen Wanne angeordnet. Diese Wanne, deren Weite sämtliche aus einem darüber anzuordnenden Schneidwerk oder einer sonstigen Zufuhreinrichtung austretenden Späne aufnimmt, sorgt durch ihre Ausgestaltung und die schrägen Flächen, dass die Späne der Transportschnecke zugeführt werden, so dass die Transportschnecke diese in den Bereich der Ansaugöffnung der Transportpumpe transportieren kann.

Durch die Verwendung der V-förmigen Wanne kann der Sammelbehälter grundsätzlich jede beliebige geometrische Form aufweisen. Vorzugsweise ist der Sammelbehälter rechteckig ausgebildet und an die Form der länglichen Transportschnecke angepasst.

Gemäß einer weiteren bevorzugten Ausführungsform ist der Sammelbehälter als Wanne ausgebildet, an deren tiefsten Stelle die Transportschnecke angeordnet ist. Dies erlaubt eine besonders einfache Ausgestaltung mit der Anordnung der Ansaugöffnung in der Stirnseite des wannenartigen Schneckentroges. Die Flüssigkeitszufuhr kann dann ebenfalls stimseitig seitlich der Förderschnecke erfolgen.

Grundsätzlich ist es auch möglich die Transportpumpe innerhalb oder außerhalb des Sammelbehälters anzuordnen. Vorzugsweise wird die Transportpumpe jedoch außerhalb des Sammelbehälters direkt im Anschluss an die Ansaugöffnung im unteren Bereich einer Seitenwand angeordnet. Dies ermöglicht einen besonders kostengünstigen und einfachen Aufbau des erfindungsgemäßen Sammelbehälters bei gleichzeitig hoher Funktionssicherheit.

Vorzugsweise ist der Sammelbehälter derart ausgebildet, dass oberhalb der Wanne ein Schneidwerk in dem Behälter angeordnet ist. Dieses kann dann bei einem entsprechenden Antrieb oberhalb des Behälters auch zumindest teilweise in die in dem Sammelbehälter befindliche Flüssigkeit hineinragen. Ein derartiger Aufbau ermöglicht insbesondere bei einer ebenen Transportschnecke eine besonders niedrige Bauhöhe.

Gemäß einer weiteren Ausbildung ist die Transportschnecke erst nach Inbetriebnahme der Transportpumpe einschaltbar, um sicher zu stellen, dass eine Verstopfung der Ansaugöffnung vermieden wird. Des weiteren befinden sich zweckmäßigerweise Füllstandssensoren an dem Sammelbehälter für die Regelung des Flüssigkeitszulaufes in dem Sammelbehälter. Damit wird sichergestellt, dass die Transportpumpe bei unterschreiten einer gewissen Flüssigkeitsmenge abschaltet, bzw. bei überschreiten einer gewissen Flüssigkeitsmenge eine entsprechende Regelung eingreift.

Durch den erfindungsgemäß ausgestalteten Sammelbehälter wird somit eine kostengünstig und einfach zu realisierende Maßnahme vorgeschlagen, um Bearbeitungsrückstände in einer Flüssigkeit, wie Schmieröl, Kühlflüssigkeit oder Bohremulsion abzutransportieren. Obwohl Förderschnecken als solche bereits lange bekannt sind, wird erstmals mit dem erfindungsgemäßen Sammelbehälter eine Transportschnecke für Metallspäne in einer derartigen Flüssigkeit realisiert, um diese einer Transportpumpe zuzuführen. Es wurde überraschender Weise festgestellt, dass mit einem derart ausgestalteten Sammelbehälter ohne dass es zu Verstopfungen kommt, eine Beladung der Transportflüssigkeit mit Spänen von 10 % (mit einer Saugpumpe gleicher Leistung wie beim Stand der Technik) und mehr erreicht werden kann. Damit ist ein höherer Durchsatz möglich, d.h. mit einer Vorrichtung kann ein wesentlich größerer Leistungsbereich abgedeckt werden, da eine Dosierung der Späne für den kontinuierlichen oder intermittierenden Betrieb in Bezug zur Transportpumpe möglich ist. Es kann das Verhältnis Späne/Flüssigkeit dosiert werden. Dadurch wird es auch möglich, einen rechteckigen Sammelbehälter zu verwenden, der damit einen geringeren Platzbedarf hat und besser an der Bearbeitungsmaschine anzuordnen ist.

Nachfolgend wird die Erfindung anhand von Ausführungsbeispielen in Verbindung mit den begleitenden Zeichnungen näher erläutert. Es stellen dar:
- Figur 1: die schematische Seitenansicht eines Sammelbehälters mit darin befindlicher geneigter Transportschnecke;
- Figur 2: die Stimansicht auf den Sammelbehälter;
- Figur 3: die schematische Seitenansicht eines als Wanne ausgebildeten Sammelbehälters mit einliegender waagerechten Transportschnecke;
- Figur 4: die Stimansicht auf den Sammelbehälter gemäß Figur 3;
- Figur 5: die schematische Seitenansicht eines als Wanne ausgebildeten Sammelbehälters für die Überflurförderung direkt auf dem Boden mit einliegender waagerechten Transportschnecke mit zusätzlicher stimseitiger Lagerung der Transportschnecke und
- Figur 6: die Stimansicht auf den Sammelbehälter gemäß Figur 5.

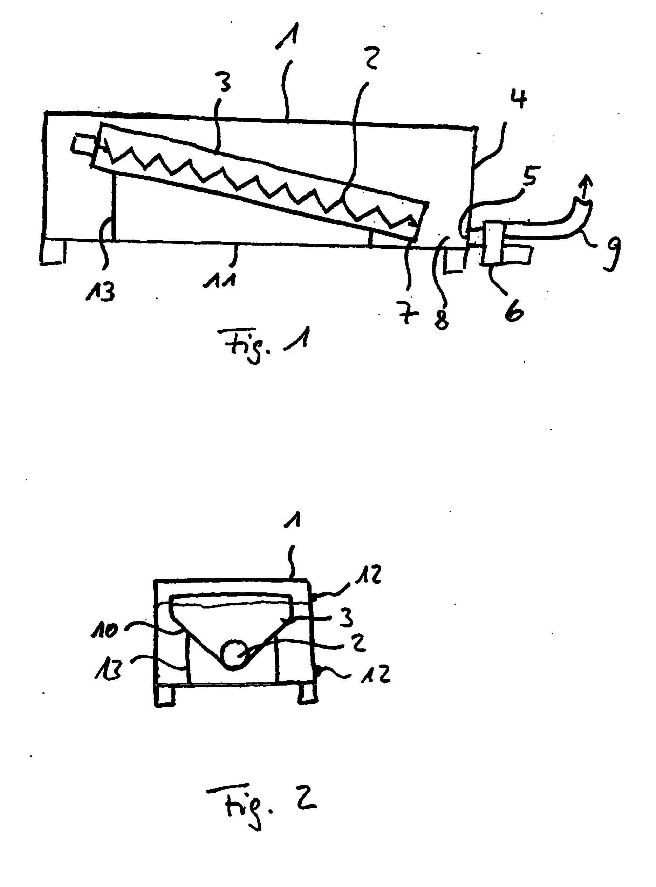

In der Figur 1 ist schematisch der Sammelbehälter 1 dargestellt, der in seinen Abmessungen an die längliche Form der darin befindlichen Transportschnecke 2 angepasst ist. Die Transportschnecke 2 befindet sich in einer V-förmigen Wanne 3 und ist zu der an der Stirnseite 4 angeordneten Ansaugöffnung 5 einer außerhalb angeordneten Transportpumpe 6 mittels entsprechender Stützen 13 geneigt. Das Ende 7 der Transportschnecke 2 ist beabstandet von der Ansaugöffnung 5. Die Transportpumpe 6 saugt die Flüssigkeit zusammen mit den herangeschafften Metallspänen aus dem Bereich 8 zwischen der Ansaugöffnung 5 und dem Ende 7 und transportiert sie über eine Leitung 9 zu einer nicht weiter ausgeführten und dargestellten Weiterverarbeitungsstation. Die Ansaugöffnung 5 befindet sich an der Stirnseite 4 möglichst nah am Sammelbehälterboden 11.

An dem Sammelbehälter 1 sind obere und untere Füllstandssensoren 12 angeordnet, um einen Überlauf bzw. ein Leerlaufen der Transportpumpe 6 zu vermeiden, in dem die entsprechenden Signale an eine nicht dargestellte Steuereinrichtung weiter geleitet werden. Mittels dieser Steuereinrichtung wird auch sichergestellt, dass die Transportpumpe 6 vor dem Einschalten der Transportschnecke 2 in Betrieb ist.

In der Figur 2 ist die in dem Ausführungsbeispiel gewählte Ausgestaltung der Wanne 3 mit der am tiefsten Punkt einliegenden Transportschnecke 2 dargestellt. Die V-förmige Wanne 3 weist schräge Seitenflächen 10 auf, um die über die Breite der Wanne einfallenden Metallspäne sicher der Transportschnecke 2 zuzuführen.

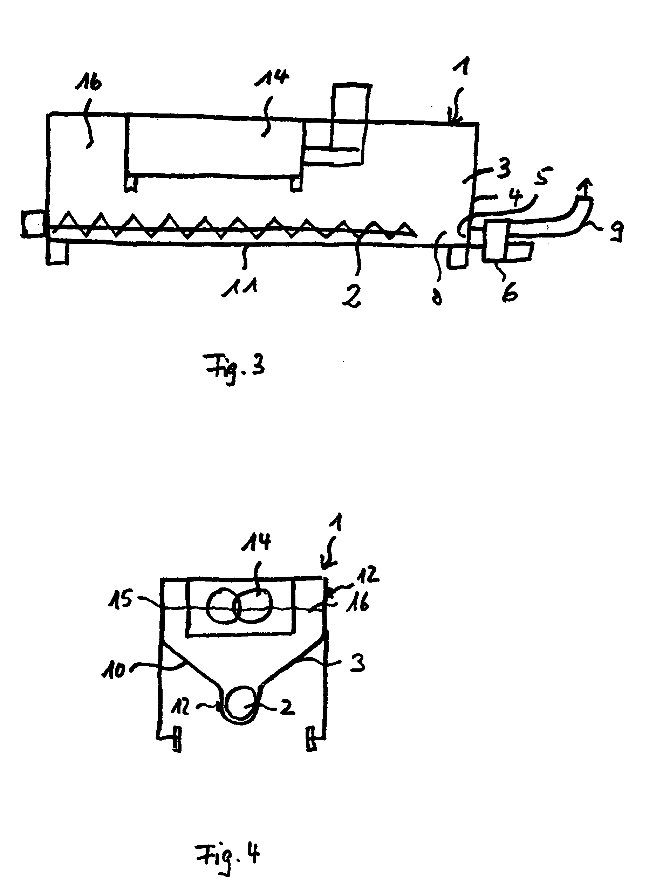

Figur 3 und Figur 4 zeigen eine andere Ausführungsform bei der der Sammelbehälter 1 gleich als Wanne 3 zur Aufnahme der Transportschnecke ausgebildet ist, so dass Schneckentrog und Flüssigkeitsaufnahme identisch sind. Im Anschluss an die schrägen Flächen 10 der Wanne sind im wesentlichen senkrechte Seitenwände 15 angeordnet, so dass der Sammelbehälter 1 oberhalb der Wanne 3 noch einen Aufnahmeraum 16 für das Schneidwerk 14 aufweist. Die von dem Schneidwerk 14 zerkleinerten Späne gelangen direkt in die Wanne 3 und werden von der im wesentlichen waagerecht angeordneten Transportschnecke 2 zu der stirnseitigen Ansaugöffnung 5 befördert. Der Antrieb der Transportschnecke 2 und des Schneidwerks 14 erfolgt in dem Ausführungsbeispiel durch außerhalb der Wanne 3 angeordnete Antriebsaggregate. Gegebenenfalls sind im Inneren der Wanne 3 noch Getriebeeinheiten vorgesehen, die auch von dem flüssigen Medium umspült werden können.

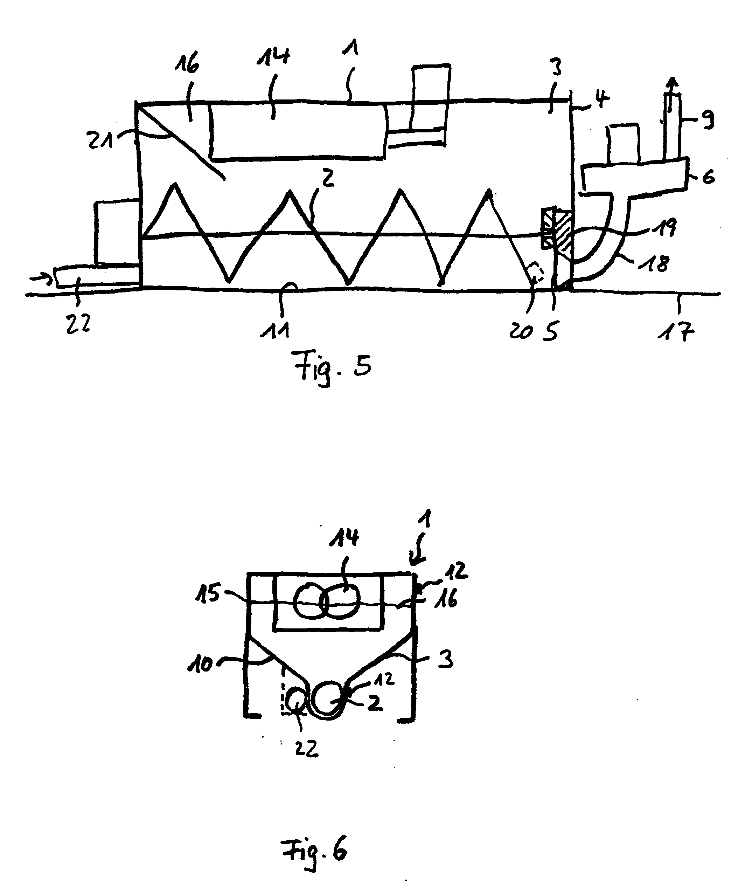

Bei der Ausführungsform gemäß Figur 5 ist der Sammelbehälter 1 direkt auf dem Boden 17 angeordnet, um einen optimalen Überflurtransport von der auf dem gleichen Boden stehenden Bearbeitungsmaschine zu ermöglichen. Damit ist es auch möglich, in dem Sammelbehälter über einen entsprechenden Zulauf am Boden von der Bearbeitungsmaschine zu dem Sammelbehälter das gleiche Flüssigkeitsniveau zu haben. Die Transportpumpe 6 wird daher bei dieser Ausführungsform direkt mit einem Bogen 18, vorzugsweise aus verschleißfestem Material, an den Sammelbehälter 1 angeschlossen. Zur Vermeidung von Abrieb ist außerdem auf der Innenseite der Stirnseite 4 eine verschleißfeste Platte 19 angeordnet. Zur Verbesserung der Ausrichtung der Späne ist die Öffnung 5 trichterförmig ausgebildet. Damit die Transportschnecke 2 nicht ausweicht, ist sie zusätzlich an der Stirnwand 4 gelagert. An dem Ende der Transportschnecke 2 ist gestrichelt, da nur als optional Möglichkeit vorgesehen, eine Räumplatte 20 dargestellt. Das Leitblech 21 verhindert, dass Späne von dem Schneidwerke 14 in den nicht fördernden Anfangsbereich der Transportschnecke 2 fallen.

Die Stimansicht in Figur 6 entspricht im wesentlichen der Stirnansicht in Figur 4. Sie zeigt zusätzlich den Einlauf 22 der Spühl/Kühlflüssigkeit seitlich der Transportschnecke 2 in den tiefsten Bereich der Wanne 3.

## Patentansprüche

1. Sammelbehälter (1) mit einer Transportpumpe (6) zur Förderung von flüssigen Medien mit Produktionsrückständen, beispielsweise Späne, Kühl- und Schmiermittel, und mit einer Einrichtung (2) zum Zuführen der Späne zu der Transportpumpe (6), **dadurch gekennzeichnet, dass** die Einrichtung zum Zuführen der Späne eine Transportschnecke (2) umfasst, deren Ende (7) im Bereich der Ansaugöffnung (5) der Transportpumpe (6) im Bereich des Sammelbehälterbodens (11) angeordnet ist.

2. Sammelbehälter nach Anspruch 1, **dadurch gekennzeichnet, dass** die Transportschnecke (2) im Bereich der tiefsten Stelle einer in dem Sammelbehälter (1) befindlichen Wanne (3) angeordnet ist.

3. Sammelbehälter nach Anspruch 1, **dadurch gekennzeichnet, dass** der Sammelbehälter (1) als Wanne (3) ausgebildet und die Transportschnecke (2) im Bereich der tiefsten Stelle angeordnet ist.

4. Sammelbehälter nach einem der vorangegangenen Ansprüche, **dadurch gekennzeichnet, dass** der Sammelbehälter (1) rechteckig ausgebildet und die Transportpumpe (6) außerhalb des Sammelbehälters (1) angeordnet ist.

5. Sammelbehälter nach Anspruch 3, **dadurch gekennzeichnet, dass** in dem Sammelbehälter (1) oberhalb der Transportschnecke (2) ein Schneidwerk (14) angeordnet ist.

6. Sammelbehälter nach einem der vorangegangenen Ansprüche, **dadurch gekennzeichnet, dass** die Transportschnecke (2) erst nach Inbetriebnahme der Transportpumpe (6) einschaltbar ist.

7. Sammelbehälter nach einem der vorangegangenen Ansprüche, **dadurch gekennzeichnet, dass** Füllstandssensoren (12) an dem Sammelbehälter (1) für die Regelung des Flüssigkeitsstandes in dem Sammelbehälter (1) angeordnet sind.

8. Verwendung einer Transportschnecke (2) in einem Sammelbehälter (1) mit einer Transportpumpe (6) zur Förderung von flüssigen Medien mit Produktionsrückständen, beispielsweise Späne, Kühl- und Schmiermittel zum Zuführen der Späne zu der Transportpumpe, wobei das Ende der Transportschnecke (2) im Bereich der Ansaugöffnung (5) der Transportpumpe (6) im Bereich des Sammelbehälter bodens (11) angeordnet ist.

## Claims

1. Collecting container (1), having a conveying pump (6) for conveying liquid media with product residues, for example chips, cooling and lubrication means, and having a means (2) for supplying the chips to the conveying pump (6), **characterised in that** the means for supplying the chips comprises a screw conveyor (2), the end (7) of which is disposed in the region of the suction opening (5) of the conveying pump (6) in the region of the collecting container base (1).

2. Collecting container according to claim 1, **characterised in that** the screw conveyor (2) is disposed in the region of the deepest point of a sump (3) situated in the collecting container (1).

3. Collecting container according to claim 1, **characterised in that** the collecting container (1) is configured as a sump (3) and the screw conveyor (2) is disposed in the region of the deepest point.

4. Collecting container according to one of the preceding claims, **characterised in that** the collecting container (1) has a rectangular configuration and the conveying pump (6) is disposed externally of the collecting container (1).

5. Collecting container according to claim 3, **characterised in that** a cutter (14) is disposed in the collecting container (1) above the screw conveyor (2).

6. Collecting container according to one of the preceding claims, **characterised in that** the screw conveyor (2) can only be switched on after the conveying pump (6) has been actuated.

7. Collecting container according to one of the preceding claims, **characterised in that** level sensors (12) are disposed on the collecting container (1) for controlling the liquid level in the collecting container (1).

8. Use of a screw conveyor (2) in a collecting container (1), having a conveying pump (6) for conveying liquid media with product residues, for example chips, cooling and lubrication means, for supplying the chips to the conveying pump, the end of the screw conveyor (2) being disposed in the region of the suction opening (5) of the conveying pump (6) in the region of the collecting container base (11).

## Revendications

1. Récipient collecteur (1) équipé d'une pompe de transfert (6) pour transporter des fluides contenant des résidus de production, par exemple des copeaux, du produit de refroidissement et du lubrifiant, et d'un dispositif (2) pour amener les copeaux à la pompe de transfert (6), **caractérisé en ce que** le dispositif pour amener les copeaux comprend une vis transporteuse (2) dont l'extrémité (7) est située dans la zone de l'ouverture d'aspiration (5) de la pompe de transfert (6), dans la zone du fond (11) du récipient collecteur.

2. Récipient collecteur selon la revendication 1, **caractérisé en ce que** la vis transporteuse (2) est située tout au fond d'une cuve (3) placée dans le récipient collecteur (1).

3. Récipient collecteur selon la revendication 1, **caractérisé en ce que** le récipient collecteur (1) est réalisé sous forme de cuve (3) et **en ce que** la vis transporteuse (2) est située dans la zone du point le plus bas.

4. Récipient collecteur selon l'une des revendications précédentes, **caractérisé en ce que** le récipient collecteur (1) est rectangulaire et **en ce que** la pompe de transfert (6) est placée en dehors du récipient collecteur (1).

5. Récipient collecteur selon la revendication 3, **caractérisé en ce qu'**un broyeur (14) est placé dans le récipient collecteur (1) au-dessus de la vis transporteuse (2).

6. Récipient collecteur selon l'une des revendications précédentes, **caractérisé en ce que** la vis transporteuse (2) ne peut être mise en marche qu'après avoir mis en route la pompe de transfert (6).

7. Récipient collecteur selon l'une des revendications précédentes, **caractérisé en ce que** des capteurs de niveau (12) sont placés sur le récipient collecteur (1) pour régler le niveau du liquide contenu dans le récipient collecteur (1).

8. Mise en oeuvre d'une vis transporteuse (2) dans un récipient collecteur (1) équipé d'une pompe de transfert (6) pour transporter des liquides contenant des résidus de production, par exemple des copeaux, du produit de refroidissement et du lubrifiant, afin d'acheminer les copeaux vers la pompe de transfert, sachant que l'extrémité de la vis transporteuse (2) est située dans la zone de l'ouverture d'aspiration (5) de la pompe de transfert (6), dans la zone du fond (11) du récipient collecteur.
